# EUROPEAN PATENT SPECIFICATION

(11) **EP 4 551 652 B1**
(45) Date of publication and mention of the grant of the patent: **01.07.2026**
(21) Application number: 23738722.0
(22) Date of filing: 05.07.2023
(51) Int. Cl.: C08L 69/00, G06K 19/07, C08K 3/22

(54) **THERMOPLASTIC COMPOSITION FOR LASER DIRECT STRUCTURING**
THERMOPLASTISCHE ZUSAMMENSETZUNG ZUR LASERDIREKTSTRUKTURIERUNG
COMPOSITION THERMOPLASTIQUE POUR STRUCTURATION DIRECTE AU LASER

(30) Priority: 05.07.2022 EP 22183123
(43) Date of publication of application: 14.05.2025
(73) Proprietor: MCE Technical Center B.V., 6167 RD Geleen (NL)
(72) Inventor: SCHRAUWEN, Bernardus Antonius Gerardus, 6167 RD Geleen (NL); PAOLUCCI, Fabio, 6167 RD Geleen (NL)
(74) Representative: EP&C
(86) International application number: PCT/EP2023/068526
(87) International publication number: WO 2024/008786

(56) References cited:
- EP-A1- 3 945 114
- US-A1- 2017 022 358
- US-A1- 2019 194 452

## Description

The present invention relates to an thermoplastic composition comprising an aromatic polycarbonate and a copper chromite spinel laser direct structuring additive. The invention also relates to a molded part comprising the composition, a process for producing a circuit carrier with the molded part, and to a circuit carrier obtainable by the process.

Polymer compositions comprising a polymer and a laser direct structuring (LDS) additive which additive is capable of being activated by laser radiation and thereby forming elemental metal nuclei, are for example described in US-B2-7060421 and WO-A-2009024496. Such polymer compositions can advantageously be used in a LDS process for producing a non-conductive part on which conductive tracks are to be formed by irradiating areas of said part with laser radiation to activate the plastic surface at locations where the conductive path is to be situated and break down the laser direct structuring additive(s) and release metal nuclei, and subsequently metalizing the irradiated areas to accumulate metal on these areas.

US2017/0022358 A1 discloses a composition which can be used to prepare circuit carriers for antennas , wherein the composition comprises 85-95 wt.% of an aromatic polycarbonate, 2-15 wt. % of a copper chromite spinel laser direct structuring additive and a phosphazene compound as flame-retardant.

WO-A-2009024496 describes aromatic polycarbonate compositions containing a metal compound capable of being activated by electromagnetic radiation and thereby forming elemental metal nuclei and 2,5-50 mass% of a rubber-like polymer, the latter being added to reduce degradation of the polycarbonate due to the presence of such metal compound in aromatic polycarbonate compositions. However, the presence of rubber-like polymer in a substantial amount is disadvantageous in some applications, in particular high temperature applications, such as parts that require soldering. For such applications, a higher softening temperature as for example expressed in the Vicat softening temperature is required. Furthermore, the presence of rubber-like polymer leads to a high viscosity, which is incompatible with modern demands, which require that objects made from these compositions are thin walled, such as e.g. having a wall thickness of ≤ 1.5 mm or even ≤ 1 mm. Thus, flow properties of these compositions should be sufficient to fill thin walled molds. In practice, this requires suitably low melt viscosity values. Finally, some rubber-like polymers, as well as a too high loading of rubber-like polymers will decrease the flame retardancy of objects made from these compositions, which is also undesirable.

However, as shown in WO-A-2009024496, compositions comprising aromatic polycarbonate and laser direct structuring additive, but no or only small amount of rubber-like polymer, are prone to degradation of the polycarbonate, which results in a decrease of the toughness as for example expressed in Izod Notched impact strength performance of a molded article from the composition.

It is therefore an object of the present invention to provide an aromatic polycarbonate composition comprising a laser direct structuring additive but no or only small amount of rubber-like polymer with improved toughness and a sufficiently high softening temperature.

It is a further object of the present invention to provide an aromatic polycarbonate composition comprising a laser direct structuring additive which composition has favorable melt flow properties.

Finally, flame retardant properties are important. It is therefore an even further object of the invention to provide an aromatic polycarbonate composition which can produce a molded article with conductive tracks which article has good flame retardant properties.

Accordingly, the present invention provides a thermoplastic composition comprising:
a) 85 - 95 wt% of an aromatic polycarbonate;
b) 2 - 13 wt% of a copper chromite spinel laser direct structuring additive,
c) 0.05 - 5 wt% of a flame retardant, which is a flame retardant salt or organic flame retardant,
d) 0.1 - 2 wt% of an acid-modified polymer,
e) optionally 0 - 5 wt% of an Si-modifier.

The amounts given for components a), b), c), d) and e) are relative to the total weight of the composition.

It has surprisingly been found that the combination of components c) and d) in an aromatic polycarbonate (herein sometimes referred to as PC) composition comprising a copper chromite spinel laser direct structuring additive (herein sometimes referred to as LDS additive) leads to a suitable melt viscosity, thus good processability of the composition for providing thin walled articles, as well as good Izod strength, high Vicat softening temperature, and excellent flame retardancy of molded parts created from the composition.

The composition according to the invention can be formed into a molded part and a conductive track can be provided thereon by a laser radiation and a subsequent metallization step.

The invention thus further relates to a molded part comprising the thermoplastic composition according to the present invention. The invention relates in particular to a molded part produced by injection molding of the composition according to the invention. The invention further also relates to an article, in particular a circuit carrier, that contains a molded part produced from the composition according to the invention and a conductive track provided thereon. In one embodiment, such a circuit carrier is used for producing an antenna.

The invention further relates to a process for producing such a circuit carrier which process comprises the steps of providing a molded part comprising the thermoplastic composition according to the present invention, irradiating areas of said part on which conductive tracks are to be formed with laser radiation, and subsequently metallizing the irradiated areas. In a preferred embodiment, the laser irradiation is used to simultaneously release metal nuclei and effect ablation of the part while forming an adhesion-promoting surface. This provides a simple means to achieve excellent adhesive strength of the deposited metallic conductor tracks. The wavelength of the laser is advantageously 248 nm, 308 nm, 355 nm, 532 nm, 1064 nm or of even 10600 nm. The deposition of further metal onto the metal nuclei generated by laser radiation preferably takes place via plating processes. Said metallization is preferably performed by immersing the molded part in at least one electroless plating bath to form electrically conductive pathways on the irradiated areas of the molded part. Non-limiting examples of electroless plating processes are a copper plating process, gold plating process, nickel plating process, silver plating, zinc plating and tin plating. Preferably, the first plating is copper plating. The conductive track may have one or more layers. The first layer may e.g. be a copper layer and may be 8-16 µm, more typically 8-12 µm. If present, the second layer may e.g. be a nickel layer and may be 2-4 µm. If present, the third layer may be e.g. be a gold layer and may be 0.05-0.2 µm.

The irradiation of the molded part may e.g. be performed under conditions comprising a power of 2-15W, a frequency of 20-100 kHz, a speed of 1-5 m/s.

The irradiation of the molded part may e.g. be performed by UV light having a wavelength from 100 to 400 nm, visible light having a wavelength from 400 to 800 nm, or infrared light having a wavelength from 800 to 25 000 nm. Other preferred forms of radiation are X-rays, gamma rays, and particle beams (electron beams, α-particle beams, and β-particle beams).

When the irradiation of the molded part is performed by UV light having a wavelength from 100 to 400 nm, it may be preferable that the molded part with the metallized areas is subjected to thermal processing for improving the delamination resistance. The thermal processing may be performed by subjecting the molded part to microwave e.g. by placing the molded part in a microwave oven. Preferably, the irradiation of the molded part is performed by visible light having a wavelength from 400 to 800 nm, or infrared light having a wavelength from 800 to 25 000 nm, or X-rays, gamma rays or particle beams. These types of laser radiation are advantageous in that the metal layer on the irradiated areas has a relatively stronger adhesion strength without requiring thermal processing after the plating step.

More preferably, the irradiation of the molded part is performed by visible light having a wavelength from 400 to 800 nm, or infrared light having a wavelength from 800 to 25 000 nm. Most preferably, the irradiation of the molded part is performed by infrared light having a wavelength from 800 to 25 000 nm.

Preferably, the process for producing the circuit carrier does not comprise a step of thermal processing after the step of metallizing the irradiated areas. This is advantageous in view of allowing an efficient process.

Preferably, a molded part of the composition according to the invention is capable of achieving a UL94 V1 or V0 rating at a thickness of 1.5 mm (±10%). More preferably, a molded part of the composition according to the invention is capable of achieving a UL94 V0 rating at a thickness of 1.5 mm (±10%).

Preferably, the composition has a melt viscosity according to ASTM D 3835 at 300 °C and 1500 s⁻¹ of less than 230 Pa.s, more preferably less than 210 Pa.s, even more preferably less than 190 Pa.s. Preferably, the composition has a melt viscosity according to ASTM D 3835 at 300 °C and 1500 s⁻¹ of more than 40 Pa.s, more preferably more than 70 Pa.s, most preferably more than 100 Pa.s.

Preferably, the Izod Notched impact strength at 23 °C (measured at a sample thickness of 3.2 mm or less according to ISO 180/4A) of a molded part of the composition, optionally provided with a conductive track made by a laser radiation and a subsequent metallization, is a value higher than 60 kJ/m², preferably higher than 65 kJ/m2, even more preferably higher than 70 kJ/m2. Typically, the value is lower than 90 or 80 kJ/m2.

Preferably, the Izod Notched impact strength at -20 °C (measured at a sample thickness of 3.2 mm or less according to ISO 180/4A) of a molded part of the composition, optionally provided with a conductive track made by a laser radiation and a subsequent metallization, is a value higher than 15 kJ/m², preferably higher than 20 kJ/m2, even more preferably higher than 25 kJ/m2. Typically, the value is lower than 70 or 60 kJ/m2.

Preferably, the Vicat B50 (Vicat Softening Temperature measured according to ISO 306 with a load of 50 N at a rate of 50°C/hour) of a molded part of the composition, optionally provided with a conductive track made by a laser radiation and a subsequent metallization, is higher than 130 °C, preferably higher than 135 °C, more preferably higher than 139 °C.

Particularly preferably, the composition according to the invention
- has a melt viscosity according to ASTM D 3835 at 300 °C and 1500 s⁻¹ of less than 230 Pa.s,
   and a molded part of the composition, optionally provided with a conductive track made by a laser radiation and subsequent metallization,
- has an Izod Notched impact strength at -20 °C (measured at a sample thickness of 3.2 mm or less according to ISO 180/4A) higher than 25 kJ/m2,
- has an Izod Notched impact strength at 23 °C (measured at a sample thickness of 3.2 mm or less according to ISO 180/4A) higher than 70 kJ/m2,
- is capable of achieving UL94 V0 or V1 rating at a thickness of 3.2 mm (±10%), and
- has a Vicat B50 (measured according to ISO 306 with a load of 50 N at a rate of 50°C/hour) of higher than 139 °C.

### Component a)

The concentration of a) aromatic polycarbonate in the composition of the present invention is between 85 wt% and 95 wt%, preferably between 86 wt% and 94 wt%, more preferably from 87 up to 93 wt%, even more preferably from 88 up to 92 wt%, with respect to the weight of the total composition.

The aromatic polycarbonate can be an aromatic polycarbonate homopolymer or an aromatic polycarbonate copolymer.

Polycarbonates including aromatic carbonate chain units include compositions having structural units of the formula (I):

-R¹-O-CO-O- (I)

in which the R¹ groups are aromatic, aliphatic or alicyclic radicals. Beneficially, R¹ is an aromatic organic radical and, in an alternative embodiment, a radical of the formula (II):

-A¹-Y¹-A²- (II)

wherein each of A¹ and A² is a monocyclic divalent aryl radical and Y¹ is a bridging radical having zero, one, or two atoms which separate A¹ from A². In an exemplary embodiment, one atom separates A¹ from A². Illustrative examples of radicals of this type are -O-, -S-, -S(O)-, -S(O2)-, -C(O)-, methylene, cyclohexyl-methylene, 2-[2,2,1]-bicycloheptylidene, ethylidene, isopropylidene, neopentylidene, cyclohexylidene, cyclopentadecylidene, cyclododecylidene, adamantylidene, or the like. In another embodiment, zero atoms separate A¹ from A², with an illustrative example being bisphenol. The bridging radical Y¹ can be a hydrocarbon group or a saturated hydrocarbon group such as methylene, cyclohexylidene or isopropylidene.

Suitable aromatic polycarbonates include polycarbonates made from at least a divalent phenol and a carbonate precursor, for example by means of the commonly known interfacial polymerization process or the melt polymersiation method. Suitable divalent phenols that may be applied are compounds having one or more aromatic rings that contain two hydroxy groups, each of which is directly linked to a carbon atom forming part of an aromatic ring. Examples of such compounds are:
4,4'-dihydroxybiphenyl, 2,2-bis(4-hydroxyphenyl)propane (bisphenol A),
2,2-bis(4-hydroxy-3-methylphenyl)propane,
2,2-bis-(3-chloro-4-hydroxyphenyl)-propane,
2,2-bis-(3,5-dimethyl-4-hydroxyphenyl)-propane,
2,4-bis-(4-hydroxyphenyl)-2-methylbutane,
2,4-bis-(3,5-dimethyl-4-hydroxyphenyl)-2-methylbutane,
4,4-bis(4-hydroxyphenyl)heptane, bis-(3,5-dimethyl-4-hydroxyphenyl)-methane,
1,1-bis-(4-hydroxyphenyl)-cyclohexane,
1,1-bis-(3,5-dimethyl-4-hydroxyphenyl)-cyclohexane,
2,2-(3,5,3',5'-tetrachloro-4,4'-dihydroxydiphenyl)propane,
2,2-(3,5,3',5'-tetrabromo-4,4'-dihydroxydiphenyl)propane,
(3,3'-dichloro-4,4'-dihydroxyphenyl)methane,
bis-(3,5-dimethyl-4-hydroxyphenyl)-sulphon, bis-4-hydroxyphenylsulphon,
bis-4-hydroxyphenylsulphide.

The carbonate precursor may be a carbonyl halogenide, a halogen formate or carbonate ester. Examples of carbonyl halogenides are carbonyl chloride and carbonyl bromide. Examples of suitable halogen formates are bis-halogen formates of divalent phenols such as hydroquinone or of glycols such as ethylene glycol. Examples of suitable carbonate esters are diphenyl carbonate, di(chlorophenyl)carbonate, di(bromophenyl)carbonate, di(alkylphenyl)carbonate, phenyltolylcarbonate and the like and mixtures thereof. Although other carbonate precursors may also be used, it is preferred to use the carbonyl halogenides and in particular carbonylchloride, also known as phosgene.

The aromatic polycarbonates in the composition according to the invention may be prepared using a catalyst, an acid acceptor and a compound for controlling the molecular mass.

Examples of catalysts are tertiary amines such as triethylamine, tripropylamine and N,N-dimethylaniline, quaternary ammonium compounds such as tetraethylammoniumbromide and quaternary phosphonium compounds such as methyltriphenylfosfoniumbromide.

Examples of organic acid acceptors are pyridine, triethylamine, dimethylaniline and so forth. Examples of inorganic acid acceptors are hydroxides, carbonates, bicarbonates and phosphates of an alkali metal or earth alkali metal.

Examples of compounds for controlling the molecular mass are monovalent phenols such as phenol, p-alkylphenols and para-bromophenol and secondary amines.

When the aromatic polycarbonate is an aromatic polycarbonate copolymer, the copolymer is preferably polysiloxane-polycarbonate copolymer.

Examples of the polysiloxane-polycarbonate copolymer are described e.g. in US5380795 and WO09040772, which are incorporated herein as follows:

The polysiloxane (also referred to as "polydiorganosiloxane") blocks of the copolymer comprise repeating siloxane units (also referred to as "diorganosiloxane units") of formula (1): 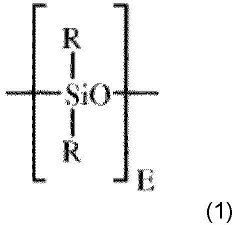 wherein each occurrence of R is same or different, and is a C₁₋₁₃ monovalent organic radical. For example, R can independently be a C₁-C₁₃ alkyl group, C₁-C₁₃ alkoxy group, C₂-C₁₃ alkenyl group, C₂-C₁₃ alkenyloxy group, C₃-C₆ cycloalkyl group, C₃-C₆ cycloalkoxy group, C₆-C₁₄ aryl group, C₆-C₁₀ aryloxy group, C₇-C₁₃ arylalkyl group, C₇-C₁₃ arylalkoxy group, C₇-C₁₃ alkylaryl group, or C₇-C₁₃ alkylaryloxy group. The foregoing groups can be fully or partially halogenated with fluorine, chlorine, bromine, or iodine, or a combination thereof. Combinations of the foregoing R groups can be used in the same copolymer.

The value of E in formula (1) can vary widely depending on the type and relative amount of each component in the thermoplastic composition, the desired properties of the composition, and like considerations. Generally, E can have an average value of 2 to 1,000, specifically 2 to 500, and more specifically 5 to 100. In one embodiment, E has an average value of 10 to 75, and in still another embodiment, E has an average value of 20 to 60. Where E is of a lower value, e.g., less than 40, it can be desirable to use siloxane based rubber in combination, possibly in a higher amount. For example, the composition comprising the polysiloxane-polycarbonate copolymer can comprise a low amount of the aromatic polycarbonate and a high amount of the siloxane based rubber. Conversely, where E is of a higher value, e.g., greater than 40, it can be desirable that the composition comprising the polysiloxane-polycarbonate copolymer comprises a high amount of the aromatic polycarbonate and a low amount of the siloxane based rubber or more preferably no siloxane based rubber.

A combination of a first and a second (or more) polysiloxane-polycarbonate copolymers can be used, wherein the average value of E of the first copolymer is less than the average value of E of the second copolymer.

In one embodiment, the polydiorganosiloxane blocks are provided by repeating structural units of formula (2): 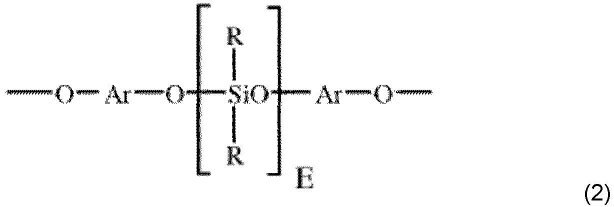 wherein E is as defined above; each R can independently be the same or different, and is as defined above; and each Ar can independently be the same or different, and is a substituted or unsubstituted C₆-C₃₀ arylene radical, wherein the bonds are directly connected to an aromatic moiety. Useful Ar groups in formula (2) can be derived from a C₆-C₃₀ dihydroxyarylene compound, for example a dihydroxyarylene compound. Combinations comprising at least one of the foregoing dihydroxyarylene compounds can also be used. Specific examples of dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4- hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulphide), and 1,1-bis(4-hydroxy-t-butylphenyl) propane. Combinations comprising at least one of the foregoing dihydroxy compounds can also be used.

Units of formula (2) can be derived from the corresponding dihydroxy compound of formula (3): 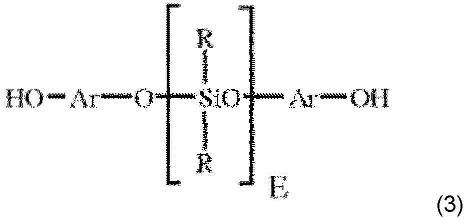 wherein R, Ar, and E are as described above. Compounds of formula (3) can be obtained by the reaction of a dihydroxyarylene compound with, for example, an alpha, omega- bisacetoxypolydiorangonosiloxane under phase transfer conditions.

In another embodiment, polydiorganosiloxane blocks comprise units of formula (4): 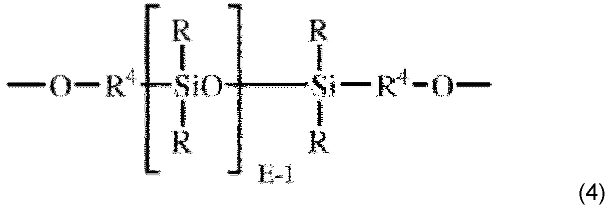 wherein R and E are as described above, and each occurrence of R is independently a divalent C₁-C₃₀ alkylene, and wherein the polymerized polysiloxane unit is the reaction residue of its corresponding dihydroxy compound. In a specific embodiment, the polydiorganosiloxane blocks are provided by repeating structural units of formula (5): 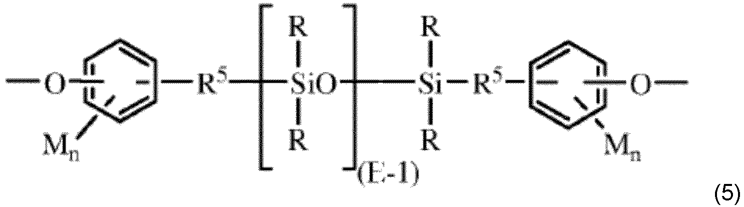 wherein R and E are as defined above. Each R⁵ in formula (5) is independently a divalent C₂-C₈ aliphatic group. Each M in formula (5) can be the same or different, and can be a halogen, cyano, nitro, C₁-C₈ alkylthio, C₁-C₈ alkyl, C₂-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ arylalkyl, C₇-C₁₂ arylalkoxy, C₇-C₁₂ alkylaryl, or C₇-C₁₂ alkylaryloxy, wherein each n is independently 0, 1, 2, 3, or 4.

In one embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R⁵ is a dimethylene, trimethylene or tetramethylene group; and R is a Ci_s alkyl, haloalkyl such as trifluoropropyl, cyanoalkyl, or aryl such as phenyl, chlorophenyl or tolyl. In another embodiment, R is methyl, or a mixture of methyl and trifluoropropyl, or a mixture of methyl and phenyl. In still another embodiment, M is methoxy, n is one, R⁵ is a divalent C₁-C₃ aliphatic group, and R is methyl.

Units of formula (5) can be derived from the corresponding dihydroxy polydiorganosiloxane (6): 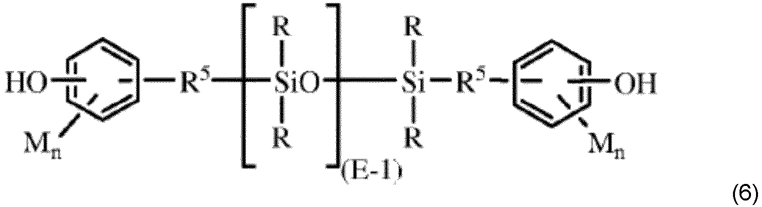 wherein R, E, M, R⁵, and n are as described above. Such dihydroxy polysiloxanescan be made by effecting a platinum catalyzed addition between a siloxane hydride of formula (7): 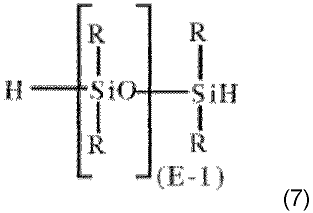 wherein R and E are as previously defined, and an aliphatically unsaturated monohydric phenol. Useful aliphatically unsaturated monohydric phenols included, for example, eugenol, 2-allylphenol, 4-allyl-2-methylphenol, 4-allyl-2-phenylphenol, 4-allyl-2-bromophenol, A- allyl-2-t-butoxyphenol, 4-phenyl-2-phenylphenol, 2-methyl-4-propylphenol, 2-allyl-4,6- dimethylphenol, 2-allyl-4-bromo-6-methylphenol, 2-allyl-6-methoxy-4-methylphenol and 2- allyl-4,6-dimethylphenol. Mixtures comprising at least one of the foregoing can also be used.

In an exemplary embodiment, the polysiloxane block is a poly(dimethyl siloxane) (PDMS) block.

The polysiloxane-polycarbonate can comprise 85 to 99 weight percent of carbonate units and 1 to 15 weight percent siloxane units. Within this range, the polysiloxane-polycarbonate copolymer can comprise 88, 90, 92, 94, 96, or 98 weight percent of carbonate units and correspondingly 2, 4, 6, 8, 10, or 12 weight percent of siloxane units. In a specific embodiment, the polysiloxane-polycarbonate comprises 85 to 98 weight percent of carbonate units and 2 to 15 weight percent siloxane units. In another specific embodiment, the polysiloxane-polycarbonate comprises 90 to 98 weight percent of carbonate units and 2 to 10 weight percent siloxane units.

In an embodiment, the polysiloxane-polycarbonate can comprise polysiloxane units, and carbonate units derived from bisphenol A. Polysiloxane-polycarbonates can have a weight average molecular weight of 2,000 to 100,000, specifically 5,000 to 50,000 as measured by gel permeation chromatography using a crosslinked styrene-divinyl benzene column, at a sample concentration of 1 milligram per milliliter, and as calibrated with polycarbonate standards.

The polysiloxane-polycarbonate can have a melt volume flow rate, measured at 300 degrees centigrade under a load of 1.2 kg, of 1 to 50 cubic centimeters per 10 minutes (cc/10 min), specifically 2 to 30 cc/10 min. Mixtures of polysiloxane-polycarbonates of different flow properties can be used to achieve the overall desired flow property. In an embodiment, exemplary polysiloxane-polycarbonates are marketed under the trade name LEXAN^{(R)} EXL polycarbonates, available from Sabic Innovative Plastics.

In an embodiment, the aromatic polycarbonate is or comprises recycled polycarbonate.

### Component b)

The term "laser direct structuring additive" or "LDS additive" is known and used e.g. in e.g. EP2291290B1, US2005064711, WO2005103113 and WO2009024496. In a laser direct structuring process, a thermoplastic composition comprising a thermoplastic resin and a laser direct structuring additive is provided and the thermoplastic composition is irradiated at areas on which conductive tracks are to be formed with laser radiation. Subsequently the irradiated areas are selectively metalized to form conductive tracks. No metallization occurs on the areas that are not irradiated with laser radiation. The metallization can be done e.g. by a standard electroless plating process, such as a copper plating process.

Without wanting to be bound by any theory, it is believed that the laser direct structuring additive may be capable of being activated by laser radiation and thereby form elemental metal particles. It is believed that these metal particles act as nuclei for copper deposition in a standard electroless copper plating process and form the basis for the formation of conductive tracks. It is also possible that the radiation is not directly absorbed by the laser direct structuring additive, but is absorbed by other substances which then transfer the absorbed energy to the laser direct structuring additive and thus bring about the liberation of elemental metal.

The laser radiation may be UV light (wavelength from 100 to 400 nm), visible light (wavelength from 400 to 800 nm), or infrared light (wavelength from 800 to 25 000 nm). Other preferred forms of radiation are X-rays, gamma rays, and particle beams (electron beams, α-particle beams, and β-particle beams). The laser radiation is preferably infrared light radiation, more preferably with a wavelength of 1064 nm.

The LDS additive used in the invention is a copper chromite spinel, such as for example CuCr₂O₄, or copper chromite manganese oxide spinel ( also called copper-chromium-manganese oxide spinel). Preferably, the LDS additive is CuCr₂O₄. Copper chromite spinels that can be used as LDS additives include the ones such as sold under the commercial name LD 5 from Shepherd Technologies.

The concentration of the component b) present in the composition of the present invention is preferably between 2 wt% and 13 wt%, more preferably between 4 and 13 wt%, even more preferably between 6 wt% and 10 wt%, and particularly preferably from 7 wt% up to 9 wt%, with respect to the weight of the total composition.

### Component c)

The flame retardant agent preferably is a flame retardant salt or an organic flame retardant.

The flame retardant salt preferably is a sulphonate salt, more preferably an alkali and/or earth alkali metal sulphonate. In one embodiment, the composition comprises an alkali metal sulphonate as sulphonate salt. Preferably, the composition comprises a potassium sulphonate as sulphonate salt. More preferably, the composition comprises potassium perfluorobutane sulphonate (PFBS) and/or potassium diphenylsulphone sulphonate (KSS) as sulphonate salt. Even more preferably, the composition comprises potassium perfluorobutane sulphonate as sulphonate salt.

The organic flame retardant preferably is an organic phosphate or phosphazene compound.

An example of an organic phosphate is an aromatic phosphate of the formula (GO)₃P=O, wherein each G is independently an alkyl, cycloalkyi, aryl, alkaryl, or aralkyl group, provided that at least one G is an aromatic group. Two of the G groups may be joined together to provide a cyclic group, for example, diphenyl pentaerythritol diphosphate, which is described by Axelrod in U.S. Pat. No. 4,154,775. Other suitable aromatic phosphates may be, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'- trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below: 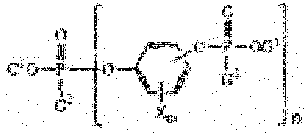 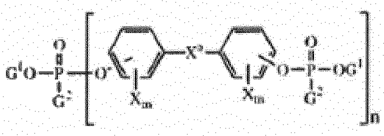 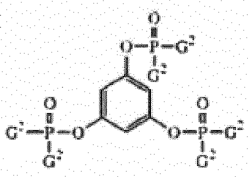 wherein each G¹ is independently a hydrocarbon having 1 to 30 carbon atoms; each G² is independently a hydrocarbon or hydrocarbonoxy having 1 to 30 carbon atoms; each X is independently a bromine or chlorine; m 0 to 4, and n is 1 to 30.

Examples of suitable di-or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like. Methods for the preparation of the aforementioned di- or polyfunctional aromatic compounds are described in British Patent No. 2,043,083.

A phosphazene compound is an organic compound containing -P=N bond. Particularly preferred phosphazene compounds include phenoxyphosphazene oligomer (also known as poly(bis(phenoxy)phosphazene)). An example of the phenoxyphosphazene oligomer is FP-110 ^{®} from Fushimi Pharmaceutical Co., Ltd. Other preferred phosphazene compounds that are commercially available include SPB-100 ^{®} from Otsuka Chemical Co., Ltd., LY202 ^{®} from Lanyin Chemical Co., Ltd..

The concentration of component c) in the composition is from 0.05 - 5 wt%, preferably from 0.1 - 3 wt%, more preferably from 0.1 - 2.5 wt% with respect to the weight of the total composition. When component c) is a flame retardant salt, the concentration is most preferably from 0.1 - 0.3 wt%. When component c) is a phosphazene compound, the concentration is most preferably from 1.5 - 2.5 wt%.

The weight ratio of sulphonate salt to laser direct structuring additive in the composition according to the invention is preferably at least 0.01:1, more preferably at least 0.015:1 and even more preferably at least 0.020:1. The weight ratio of sulphonate salt to laser direct structuring additive in the composition according to the invention is preferably at most 0.35:1 and more preferably at most 0.30:1.

### Component d)

The acid-modified polymer may be a polymer obtained by modifying a polymer with a compound having a functional group, such as an unsaturated carboxylic acid. Preferably, the acid-modified polymer is an acid-modified olefin polymer or an acid-modified styrene polymer, more preferably an acid-modified olefin polymer.

The olefin polymer is preferably a polyethylene or polypropylene.

The olefin polymer preferably has a weight-average molecular weight of 1,000 to 5,000 g/mol.

Preferably, the acid-modified polymer is a polymer modified by an unsaturated carboxylic acid, preferable selected from the group consisting of acrylic acid, maleic acid, itaconic acid, maleic anhydride, itaconic anhydride and maleic acid monoamide.

Most preferably, the acid-modified olefin polymer is a maleic anhydride-modified polyethylene. Suitable examples include commercially available Mitsui Hi-WAX 1105A, manufactured by Mitsui Chemicals, Inc., Mv 1500, Density 940 kg/m3, acid value: 60 KOHmg/g.

The amount of d) is with respect to the total composition is 0.1 to 2.0 wt%, preferably 0.2 to 1.5 wt%, more preferably 0.4 to 1.5 wt%.

### Component e)

The presence of a siloxane based rubber in aromatic polycarbonate compositions comprising a metal compound capable of being activated by electromagnetic radiation and thereby forming elemental metal nuclei, results in less degradation or even prevents the degradation of the polycarbonate in the composition, as for example manifested in an increase of melt flow stability and/or toughness. Although presence of such a component in the composition of the present invention is not required, the properties of the compositions may be further increased by the presence of such siloxane based rubber.

The siloxane based rubber is preferably a polyorganosiloxane containing graft copolymer preferably prepared by polymerizing 5 to 60 parts by weight of a vinyl monomer (e-I) in the presence of 40 to 95 parts by weight of polyorganosiloxanes particles (e-II) (the sum of (e-I) and (e-II) is 100 parts by weight), as for example described in US2005/0143520. Examples of the vinyl monomers (e-I) include, for example, aromatic vinyl monomers such as styrene, alpha -methylstyrene, p-methylstyrene, and p-butylstyrene; vinylcyanide monomers such as acrylonitrile and methacrylonitrile; (meth)acrylic acid ester monomers such as methyl acrylate, ethyl acrylate, propyl acrylate, butyl acrylate, 2-ethylhexyl acrylate, glycidyl acrylate, hydroxyethyl acrylate, hydroxybutyl acrylate, methyl methacrylate, ethyl methacrylate, butyl methacrylate, lauryl methacrylate, glycidyl methacrylate, and hydroxyethyl methacrylate; and carboxyl-group-containing vinyl monomers such as itaconic acid, (meth)acrylic acid, fumaric acid, and maleic acid. The vinyl monomer (e-I) may include a multifunctional monomer having at least two polymerizable unsaturated bonds per molecule, if necessary. Examples of the multifunctional monomers include allyl methacrylate, triallyl cyanurate, triallyl isocyanurate, diallyl phthalate, ethylene glycol dimethacrylate, 1,3-butylene glycol dimethacrylate, and divinylbenzene. The vinyl monomer (e-I) may be used alone or in combination. The polyorganosiloxane particles (e-II) are preferably prepared by emulsion polymerization of the constituent components. A normal seeded emulsion polymerization can be applied to the graft copolymerization and can be achieved by radical-polymerizing the vinyl monomer (e-I) in latex of the polyorganosiloxane particles (e-II).

These polyorganosiloxane containing graft copolymers are commercially available, e.g. as Kane Ace MR01 and Kane Ace MR02 from Kaneka Company.

Other suitable siloxane based rubbers include Metablen S-2001, Metablen S-2200 and Metablen SX-005 from Mitsubishi Rayon.

The composition according to the invention comprises no methylmethacrylate butadiene styrene (MBS) based rubber. Preferably, the composition according to the invention comprises no other rubber than the siloxane-based rubber as described above ( i.e component e)

Preferably, the siloxane-based rubber as described above ( i.e component e) is in a range of 0 - 5 wt% as relative to the total weight of the composition. More preferably, the siloxane-based rubber is in a range of 0 - 1.5 wt %.

### Component f)

The thermoplastic composition according to the invention may further comprise f) an anti-drip agent.

Preferably, the amount of the component f) is 0 - 2.0 wt% or 0.05 - 2.0 wt%, more preferably 0.1 - 1.5 wt%, more preferably 0.2 - 1.0 wt%, with respect to the weight of the total composition. The presence of the component f) is optional, and hence the composition according to the invention may comprise little or no component f). For example, the amount of the component f) may be less than 0.05 wt%, less than 0.01 wt% or 0 wt%, with respect to the total composition.

Suitable examples of anti-drip agents include fluoropolymers such as polytetrafluoroethylene (PTFE). The fluoropolymers may be a fibril forming fluoropolymer such as fibril forming polytetrafluoroethylene (PTFE) or a non-fibril forming fluoropolymer such as non-fibril forming polytetrafluoroethylene.

The anti-drip agent may be in the form of an (aqueous) dispersion of a fluoropolymer. In this case, the dispersion contains a sufficient amount of a fluoropolymer, e.g. at least 30 wt% or at least 50 wt% of the dispersion.

The anti-drip agent may be in the form of a mixture of a fluoropolymer and a further polymer, for example an encapsulated fluoropolymer. In this case, the dispersion contains a sufficient amount of a fluoropolymer, e.g. at least 30 wt% or at least 50 wt% of the mixture. The further polymer may e.g. be an acrylate copolymer or styreneacrylonitrile. An example of a mixture of a fluoropolymer and an acrylate polymer is commercially available as METABLEN A-3800 from Mitsubishi Rayon. An encapsulated fluoropolymer may be made by polymerizing the polymer in the presence of the fluoropolymer.

Preferably, the anti-drip agent is a mixture of a fluoropolymer and a further polymer, such as an encapsulated fluoropolymer. Such anti-drip can be handled better compared to an anti-drip agent in the form of a dispersion, since the feeding in an extruder is easier and no removal of water from the composition is required.

### Component g)

The thermoplastic composition according to the invention may further comprise g) 0 to 10 wt% of one or more other additives, relative to the total weight of the composition. These include the customary additives such as stabilizers against thermal or thermo-oxidative degradation, stabilizers against hydrolytic degradation, stabilizers against degradation from light, in particular UV light, and/or photo-oxidative degradation and processing aids such as release agents and lubricants. Suitable examples of such additives and their customary amounts are stated in the Kunststoff Handbuch, 3/1. The total amount of the additives is typically 0 to 5 wt%, for example 0.1 to 3 wt% or 0.3 to 1 wt%.

Although the invention has been described in detail for purposes of illustration, it is understood that such detail is solely for that purpose and variations can be made therein by those skilled in the art without departing from the scope of the invention as defined in the claims.

It is further noted that the invention relates to all possible combinations of features described herein, preferred in particular are those combinations of features that are present in the claims.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention is now elucidated by way of the following examples, without however being limited thereto.

### Experiments

Comparative experiments (CEx.) and example compositions (Ex.), summarized in Tables 2 - 5, were prepared from the components as given in Table 1.

All amounts are in weight percentage. In each of the experiments, samples were extruded on a co-rotating twin screw extruder at a temperature of 280 °C. The extrudate was granulated and the collected granulate was injection molded into ASTM-sized Izod bars (64*12.7<*>3.2 mm) using a melt temperature of approximately 290°C, Izod Notched impact strength was measured according to ISO180/4A at a temperature of 23°C and 0°C and the LVN (Limited Viscosity Number, ISO 1628/4) of the molded parts was measured. In order to measure the Vicat B50 (Vicat Softening Temperature according ISO 306 with a load of 50 N at a rate of 50°C/hour) ISO-sized Izod bars (80*10*4 mm) were molded and in order to measure the UL94 V-rating (according IEC 60695-1 1-10 standard) bars with a thickness of 1.6 and 3.2 mm were molded. MV was determined according to ASTM D 3538 at a temperature of 300°C and an applied shear rate of 1500 s⁻¹.

**Table 1**

| **Material** | **Type** | **Supplier** |
|---|---|---|
| PC | Polycarbonate with LVN varying from 42-48 ml/g | MEP |
| PCR1 | Post Consumer Recycled Polycarbonate from Water Bottles (LVN = 51.5 ml/g) | Hong Yu |
| PCR2 | Post Consumer Recycled Polycarbonate from Head Lamps (LVN = 46.7 ml/g) | Hong Yu |
| P-FR1 | SPB-100 (phosphazene) | Hebron |
| P-FR2 | HPCPT (Hexaphenoxycyclotriphosphaz ene) | Pharmorgana |
| P-FR3 | Rabitle FP-110 (phenoxyphosphazene) | Fushimi Pharmaceutical Co., Ltd. |
| FR-Salt1 | RP 65 (Potassium Perfluorobutane Sulfonate) | Chemwell |
| FR-Salt2 | KSS-FR (Potassium Diphenylsolfone Sulfonate) | Arichem, LLC |
| CuCr₂O₄ | LD 5 (Copper Chrome Spinel) | Shepherd Technologies |
| Cu₂O | LD 32 (Copper Oxide) | Shepherd Technologies |
| CCTO | EX 1845 (Calcium Copper Titanate) | Shepherd Technologies |
| Hi-Wax | Hi-WAX 1105A (acid modified ethylenepropylene copolymer) | Mitsui |
| Si Modifier | Kane Ace MR-02 (Siloxane-Methacrylic ester copolymer) | Kaneka |
| Heat Stab | ADK Stab 2112 (Phosphite) | Adeka |
| PTFE1 | PTFE dispersion DISP 40 (PTFE 60% dispersed in water) | Chemours |
| PTFE2 | Polyflon FA-500H (PTFE) | Daikin |

**Table 2**

| | | CEx. 1 | CEx. 2 | CEx. 3 | CEx. 4 | Ex. 1 | Ex. 2 |
|---|---|---|---|---|---|---|---|
| | | | | | | | |

| | | wt% | wt% | wt% | wt% | wt% | wt% |
|---|---|---|---|---|---|---|---|
| PC (LVN=47, MFI=16) | | 91.65 | 91.15 | 90.65 | 89.65 | 89.15 | 88.65 |
| CuCr2O4 | | 8.00 | 8.00 | 8.00 | 8.00 | 8.00 | 8.00 |
| P-FR1 | | | | | 2.00 | 2.00 | 2.00 |
| Heat Stab | | 0.05 | 0.05 | 0.05 | 0.05 | 0.05 | 0.05 |
| PTFE1 | | 0.30 | 0.30 | 0.30 | 0.30 | 0.30 | 0.30 |
| Hi-Wax | | | 0.50 | 1.00 | | 0.50 | 1.00 |
| | SUM | 100.00 | 100.00 | 100.00 | 100.00 | 100.00 | 100.00 |
| | | | | | | | |
| MFI @ 300°C/1.2kg | dg/min | 61.6 | 16.1 | 16.2 | 60.5 | 19.4 | 19.3 |
| MV @ 300°C/1500s-1 | Pa.s | 49 | 168 | 198 | 79 | 171 | 112 |
| LVN (Mw) | ml/g | 39 | 47 | 47 | 42 | 46 | 45 |
| Vicat Temp | °C | 140.4 | 145.3 | 144.3 | 139.6 | 141.6 | 140.8 |
| Izod Notched +23C | kJ/m² | 7 | 75 | 72 | 8 | 76 | 72 |
| Izod Notched -20C | kJ/m² | 8 | 50 | 58 | 9 | 27 | 30 |
| UL @ 1.5 mm | - | V2 | NC | NC | V2 | V1 | V1 |

As can be seen, all examples as well as comparative examples of Table 2 have a desirable high Vicat Softening Temperature of 139.0 °C or more, which is desirable for high temperature applications. However, only in the examples according to the invention is this combined with a favorable combination of further properties as will be explained below.

It can be seen from CEx. 1 that the MFI of a PC composition dramatically increases from a value of 16 dg/min for just the PC to a value of 61,6 dg/min upon addition of CuCr₂O₄. This is due to vast degradation of the polymer. Due to the degradation, the average molecular weight of the polymer chains decreases, thereby increasing the melt flow and resulting in a low MV (melt viscosity) and LVN. The Izod strengths consequentially are also drastically low as compared to the values for pure PC, which typically has an Izod Notched value at 23 °C of > 70 kJ/m2 and about 15 - 20 kJ/m2 at -20 °C.

Degradation can be prevented by the addition of Hi-Wax, as can be seen in CEx. 2, where addition of 0,5 wt% of Hi-Wax leads to a stable MFI of 16,1, a melt viscosity of 168 and LVN of 47, and relatively high Izod values. However, flame retardancy (UL-V) in this case shows a No Class rating.

The increased amount of Hi-Wax in CEx. 3 leads to a higher melt viscosity, which is slightly less advantageous, though still at an acceptable value. However, as is to be expected, also in this example, there is no UL-V flame retardancy rating.

Addition of only a flame retardant without Hi-Wax leads to a flame retardant composition, see CEx. 4. However, again in this case degradation is high, as evidenced by e.g. the high MFI value and dramatically low Izod values.

Surprisingly, the combination of the flame retardant and Hi-Wax results in an excellent flame retardancy rating of V1, as can be seen in Ex. 1 and Ex. 2. The combination of Hi-Wax and flame retardant provides a synergistic effect, increasing the flame retardancy from a V2 rating for the individual compositions comprising only flame retardant or only Hi-Wax to a V1 rating for the combination of these components.

Thus, combined addition of a flame retardant with an acid-modified polymer results in polycarbonate compositions with a combination of a suitable melt viscosity (< 230 Pa.s) for creating thin walled objects, which polycarbonate compositions may be formed into a molded article with high Vicat temperature (> 139.0 °C), good Izod strength (>15 kJ/m2 @ -20 °C and > 60 kJ/m2 @ 23 °C) as well as excellent flame retardancy (V1 or V0).

**Table 3**

| | | Ex. 3 | Ex. 4 | CEx. 5 | CEx. 6 | CEx. 7 |
|---|---|---|---|---|---|---|
| | | | | | | |

| | | wt% | wt% | wt% | wt% | wt% |
|---|---|---|---|---|---|---|
| PC (LVN=48) | | 88.15 | 88.15 | 96.15 | 88.15 | 88.15 |
| CuCr2O4 | | 8.00 | 8.00 | | | |
| Cu2O | | | | | 8.00 | |
| CCTO | | | | | | 8.00 |
| Si Modifier | | 1.00 | 1.00 | 1.00 | 1.00 | 1.00 |
| P-FR1 | | 2.00 | | 2.00 | 2.00 | 2.00 |
| P-FR2 | | | 2.00 | | | |
| Heat Stab | | 0.05 | 0.05 | 0.05 | 0.05 | 0.05 |
| PTFE2 | | 0.30 | 0.30 | 0.30 | 0.30 | 0.30 |
| Hi-Wax | | 0.50 | 0.50 | 0.50 | 0.50 | 0.50 |
| | SUM | 100.00 | 100.00 | 100.00 | 100.00 | 100.00 |
| | | | | | | |
| MFI @ 300°C/1.2kg | dg/min | 13.4 | 13.6 | 11.1 | 48.0 | 13.2 |
| MV @ 300°C/1500s-1 | Pa.s | 218 | 198 | 252 | 79 | 192 |
| Vicat Temp | °C | 141.9 | 141.6 | 142.6 | 138.2 | 141.5 |
| Izod Notched +23C | kJ/m² | 75 | 76 | 83 | 8 | 78 |
| Izod Notched -20C | kJ/m² | 33 | 58 | 16 | 8 | 14 |
| UL @ 1.5 mm | - | V0 | V1 | NC | NC | NC |

Table 3 provides examples and comparative examples including an Si Modifier.

Addition of an Si modifier increases the flame retardancy rating from V1 to V0 (compare Ex. 3 to Ex. 1) and/or results in a V1 rating with improved Izod strength (ex. 4). Table 3 furthermore exemplifies the variation in results upon variation of the LDS additive. Only when CuCr2O4 is used as LDS additive, a V0 or V1 flame retardancy rating is achieved.

**Table 4**

| | | Ex. 5 | Ex. 6 | Ex. 7 | Ex. 8 |
|---|---|---|---|---|---|
| | | | | | |

| | | wt% | wt% | wt% | wt% |
|---|---|---|---|---|---|
| PC (LVN=42) | | 38.95 | 39.15 | 38.15 | |
| PC (LVN=48) | | | | | 38.15 |
| PCR1 | | 50.00 | 50.00 | 50.00 | |
| PCR2 | | | | | 50.00 |
| CuCr2O4 | | 8.00 | 8.00 | 8.00 | 8.00 |
| Si Modifier | | | | 1.00 | 1.00 |
| P-FR1 | | 2.00 | | 2.00 | 2.00 |
| P-FR3 | | | 2.00 | | |
| Heat Stab | | 0.05 | 0.05 | 0.05 | 0.05 |
| PTFE1 | | 0.50 | | | |
| PTFE2 | | | 0.30 | 0.30 | 0.30 |
| Hi-Wax | | 0.50 | 0.50 | 0.50 | 0.50 |
| | SUM | 100.00 | 100.00 | 100.00 | 100.00 |
| | | | | | |
| MFI @ 300°C/1.2kg | dg/min | 17.7 | 17.4 | 17.4 | 16.1 |
| MV @ 300°C/1500s-1 | Pa.s | 176 | 159 | 173 | 156 |
| Vicat Temp | °C | 140.0 | 139.4 | 140.3 | 139.2 |
| Izod Notched +23C | kJ/m² | 66 | 70 | 68 | 71 |
| Izod Notched -20C | kJ/m² | 17 | 25 | 30 | 19 |
| UL @ 1.5 mm | - | V0 | V0 | V0 | V0 |

Table 4 shows results for different mixtures of virgin polycarbonate with recycled polycarbonate. The viscosity of the virgin polycarbonate was selected to result in a similar MFI of the PC mixture as compared to the previous experiments. All samples have excellent flame retardancy and good flow and strength, indicating that recycled polycarbonate may be used.

**Table 5**

| | | Ex. 9 | Ex. 10 |
|---|---|---|---|
| | | | |

| | | wt% | wt% |
|---|---|---|---|
| PC (LVN=47, MFI=16) | | 90.95 | 90.95 |
| CuCr2O4 | | 8.00 | 8.00 |
| FR-Salt1 | | 0.20 | |
| FR-Salt2 | | | 0.20 |
| Heat Stab | | 0.05 | 0.05 |
| PTFE1 | | 0.30 | 0.30 |
| Hi-Wax | | 0.50 | 0.50 |
| | SUM | 100.00 | 100.00 |
| | | | |
| MFI @ 300°C/1.2kg | dg/min | 18.1 | 18.9 |
| MV @ 300°C/1500s-1 | Pa.s | 198 | 197 |
| LVN (Mw) | ml/g | 47 | 47 |
| Vicat Temp | °C | 147.3 | 147.2 |
| Izod Notched +23C | kJ/m² | 72 | 71 |
| Izod Notched -20C | kJ/m² | 44 | 28 |
| UL @ 1.5 mm | - | V0 | V0 |

Finally, also compositions with other flame retardants provide for composition with excellent flame retardancy as well as good flow and strength, as can be seen in Table 5.

## Claims

1. A thermoplastic composition comprising:
a) 85 - 95 wt% of an aromatic polycarbonate;
b) 2 - 13 wt% of a copper chromite spinel laser direct structuring additive,
c) 0.05 - 5 wt% of a flame retardant, which is a flame retardant salt or organic flame retardant,
d) 0.1 - 2 wt% of an acid-modified polymer,
e) optionally 0 - 5 wt% of a siloxane based rubber, wherein the amounts given for components a), b), c), d) and e) are relative to the total weight of the composition.

2. The composition according to claim 1, wherein the copper chromite spinel laser direct structuring additive is CuCr₂O₄.

3. The composition according to claim 1 or 2, wherein the flame retardant salt is a sulphonate salt, preferably a potassium sulphonate salt, more preferably potassium perfluorobutane sulphonate.

4. The composition according to any one of the preceding claims, wherein the organic flame retardant is a phosphazene compound, preferably a phenoxyphosphazene.

5. The composition according to any one of the preceding claims, wherein the acid-modified polymer is an acid-modified olefin polymer, preferably a maleic anhydride modified polyethylene.

6. The composition according to any one of the preceding claims, wherein a molded part of the composition is capable of achieving a UL94 V1 or V0 rating at a thickness of 1.5 mm (±10%).

7. The composition according to any one of the preceding claims, wherein the composition has a melt viscosity according to ASTM D 3538 at 300 °C and 1500 s⁻¹ of less than 230 Pa.s, preferably less than 210 Pa.s, more preferably less than 190 Pa.s.

8. The composition according to any one of the preceding claims, wherein the composition has a melt viscosity according to ASTM D 3538 at 300 °C and 1500 s⁻¹ of more than 40 Pa.s, preferably more than than 70 Pa.s, more preferably more than 100 Pa.s.

9. The composition according to any one of the preceding claims, wherein a molded part of the composition has an Izod Notched impact strength according to ISO180/4A at a temperature of 23°C of more than 60 kJ/m2, preferably more than 65 kJ/m2, more preferably more than 70 kJ/m2.

10. The composition according to any one of the preceding claims, wherein a molded part of the composition has an Izod Notched impact strength according to ISO180/4A at a temperature of -20°C of more than 15 kJ/m2, preferably more than 20 kJ/m2, more preferably more than 25 kJ/m2.

11. The compositions according to any one of the preceding claims, wherein a molded part of the composition has a Vicat Softening Temperature according ISO 306 with a load of 50 N at a rate of 50°C/hour which is higher than 130°C, preferably higher than 135 °C, more preferably higher than 139 °C.

12. A molded part comprising the composition according to any one of claims 1-11.

13. A process for producing a circuit carrier, comprising providing the molded part according to claim 12; irradiating areas of said part on which conductive tracks are to be formed with laser radiation; and subsequently metalizing the irradiated areas.

14. The circuit carrier obtainable by the process according to claim 13.

15. An antenna comprising the circuit carrier according to claim 14.

## Patentansprüche

1. Thermoplastische Zusammensetzung, umfassend:
a) zu 85-95 Gew.-% ein aromatisches Polycarbonat;
b) zu 2-13 Gew.-% ein Kupferchromitspinell-Laserdirektstrukturierungsadditiv,
c) zu 0,05-5 Gew.-% ein flammhemmendes Mittel, das ein flammhemmendes Salz oder ein organisches flammhemmendes Mittel ist,
d) zu 0,1-2 Gew.-% ein säuremodifiziertes Polymer,
e) optional zu 0-5 Gew.-% einen Kautschuk auf Siloxanbasis, wobei die für die Komponenten a), b), c), d) und e) angegebenen Mengen relativ zu dem Gesamtgewicht der Zusammensetzung sind.

2. Zusammensetzung nach Anspruch 1, wobei das Kupferchromitspinell-Laserdirektstrukturierungsadditiv CuCr2O4 ist.

3. Zusammensetzung nach Anspruch 1 oder 2, wobei das flammhemmende Salz ein Sulfonatsalz, vorzugsweise ein Kaliumsulfonatsalz, mehr bevorzugt Kaliumperfluorbutansulfonat, ist.

4. Zusammensetzung nach einem der vorstehenden Ansprüche, wobei das organische flammhemmende Mittel eine Phosphazenverbindung, vorzugsweise ein Phenoxyphosphazen, ist.

5. Zusammensetzung nach einem der vorstehenden Ansprüche, wobei das säuremodifizierte Polymer ein säuremodifiziertes Olefinpolymer, vorzugsweise ein maleinsäureanhydridmodifiziertes Polyethylen, ist.

6. Zusammensetzung nach einem der vorstehenden Ansprüche, wobei ein Formteil der Zusammensetzung zum Erreichen einer Einstufung von UL94 V1 oder V0 bei einer Dicke von 1,5 mm (±10 %) imstande ist.

7. Zusammensetzung nach einem der vorstehenden Ansprüche, wobei die Zusammensetzung eine Schmelzviskosität gemäß ASTM D 3538 bei 300 °C und 1500 s⁻¹ von weniger als 230 Pa.s, vorzugsweise weniger als 210 Pa.s, mehr bevorzugt weniger als 190 Pa.s, aufweist.

8. Zusammensetzung nach einem der vorstehenden Ansprüche, wobei die Zusammensetzung eine Schmelzviskosität gemäß ASTM D 3538 bei 300 °C und 1500 s⁻¹ von mehr als 40 Pa.s, vorzugsweise mehr als 70 Pa.s, mehr bevorzugt mehr als 100 Pa.s, aufweist.

9. Zusammensetzung nach einem der vorstehenden Ansprüche, wobei ein Formteil der Zusammensetzung eine Izod-Kerbschlagzähigkeit gemäß ISO180/4A bei einer Temperatur von 23 °C von mehr als 60 kJ/m2, vorzugsweise mehr als 65 kJ/m2, mehr bevorzugt mehr als 70 kJ/m2, aufweist.

10. Zusammensetzung nach einem der vorstehenden Ansprüche, wobei ein Formteil der Zusammensetzung eine Izod-Kerbschlagzähigkeit gemäß ISO180/4A bei einer Temperatur von -20 °C von mehr als 15 kJ/m2, vorzugsweise mehr als 20 kJ/m2, mehr bevorzugt mehr als 25 kJ/m2, aufweist.

11. Zusammensetzungen nach einem der vorstehenden Ansprüche, wobei ein Formteil der Zusammensetzung eine Vicat-Erweichungstemperatur gemäß ISO 306 mit einer Kraft von 50 N bei einer Rate von 50 °C/Stunde aufweist, die höher als 130 °C, vorzugsweise höher als 135 °C, mehr bevorzugt höher als 139 °C, ist.

12. Formteil, umfassend die Zusammensetzung nach einem der Ansprüche 1 bis 11.

13. Verfahren zum Produzieren eines Schaltungsträgers, umfassend ein Bereitstellen des Formteils nach Anspruch 12; ein Bestrahlen von Bereichen des Teils, auf denen Leiterbahnen geformt werden sollen, mit Laserstrahlung; und anschließend ein Metallisieren der bestrahlten Bereiche.

14. Schaltungsträger, der durch das Verfahren nach Anspruch 13 erhalten werden kann.

15. Antenne, umfassend den Schaltungsträger nach Anspruch 14.

## Revendications

1. Composition thermoplastique comprenant :
a) 85 à 95 % en poids d'un polycarbonate aromatique ;
b) 2 à 13 % en poids d'un additif de structuration laser directe de spinelle de chromite et de cuivre,
c) 0,05 à 5 % en poids d'un retardateur de flamme, qui est un sel retardateur de flamme ou un retardateur de flamme organique,
d) 0,1 à 2 % en poids d'un polymère modifié par un acide,
e) éventuellement, 0 à 5 % en poids d'un caoutchouc à base de siloxane, dans laquelle les quantités indiquées pour les composants a), b), c), d) et e) se rapportent au poids total de la composition.

2. Composition selon la revendication 1, dans laquelle l'additif de structuration laser directe de spinelle de chromite et de cuivre est CuCr2O4.

3. Composition selon la revendication 1 ou 2, dans laquelle le sel retardateur de flamme est un sel de sulfonate, de préférence un sel de sulfonate de potassium, plus préférablement du sulfonate de perfluorobutane de potassium.

4. Composition selon l'une quelconque des revendications précédentes, dans laquelle le retardateur de flamme organique est un composé phosphazène, de préférence un phénoxyphosphazène.

5. Composition selon l'une quelconque des revendications précédentes, dans laquelle le polymère modifié par un acide est un polymère oléfine modifié par un acide, de préférence un polyéthylène modifié par l'anhydride maléique.

6. Composition selon l'une quelconque des revendications précédentes, dans laquelle une pièce moulée de la composition est capable d'atteindre un classement V1 ou V0 à l'essai UL94 à une épaisseur de 1,5 mm (± 10 %).

7. Composition selon l'une quelconque des revendications précédentes, dans laquelle la composition a une viscosité à l'état fondu selon la norme ASTM D 3538 à 300 °C et à 1500 s⁻¹ inférieure à 230 Pa.s, de préférence inférieure à 210 Pa.s, plus préférablement inférieure à 190 Pa.s.

8. Composition selon l'une quelconque des revendications précédentes, dans laquelle la composition a une viscosité à l'état fondu selon la norme ASTM D 3538 à 300 °C et à 1500 s⁻¹ de plus de 40 Pa.s, de préférence de plus de 70 Pa.s, plus préférablement de plus de 100 Pa.s.

9. Composition selon l'une quelconque des revendications précédentes, dans laquelle une pièce moulée de la composition a une résistance au choc Izod selon la norme ISO 180/4A à une température de 23 °C de plus de 60 kJ/m2, de préférence de plus de 65 kJ/m2, plus préférablement de plus de 70 kJ/m2.

10. Composition selon l'une quelconque des revendications précédentes, dans laquelle une pièce moulée de la composition a une résistance au choc Izod selon la norme ISO 180/4A à une température de -20 °C de plus de 15 kJ/m2, de préférence de plus de 20 kJ/m2, plus préférablement de plus de 25 kJ/m2.

11. Compositions selon l'une quelconque des revendications précédentes, dans lesquelles une pièce moulée de la composition a une température de ramollissement Vicat selon la norme ISO 306 avec une charge de 50 N à une vitesse de 50 °C/heure qui est supérieure à 130 °C, de préférence supérieure à 135 °C, plus préférablement supérieure à 139 °C.

12. Pièce moulée comprenant la composition selon l'une quelconque des revendications 1 à 11.

13. Procédé pour la production d'un support de circuit, comprenant la fourniture de la pièce moulée selon la revendication 12 ; l'irradiation de zones de ladite pièce sur lesquelles des pistes conductrices doivent être formées avec un rayonnement laser ; et ensuite la métallisation des zones irradiées.

14. Support de circuit pouvant être obtenu par le procédé selon la revendication 13.

15. Antenne comprenant le support de circuit selon la revendication 14.
